# EUROPEAN PATENT APPLICATION

(11) **EP 1 630 137 A1**
(43) Date of publication of application: **01.03.2006**
(21) Application number: 03730608.1
(22) Date of filing: 23.05.2003
(51) Int. Cl.: C02F 1/461, C02F 1/68

(54) **MINERAL WATER PRODUCING SYSTEM**

(71) Applicant: Sanden Corporation, Isesaki-shi, Gunma 372-8502 (JP)
(72) Inventor: ITO, Miwako, Iseaki-shi, Gunma 372-8502 (JP); WATANABE, Kazushige, Iseaki-shi, Gunma 372-8502 (JP); SATO, Motoharu, Iseaki-shi, Gunma 372-8502 (JP)
(74) Representative: Haley, Stephen
(86) International application number: PCT/JP2003/006468
(87) International publication number: WO 2004/103915

(57) **Abstract**

A mineral-water producing apparatus that including: an electrolytic tank to which raw water, such as city water, is supplied; a mineral eluting material(s) arranged in the electrolytic tank; and a pair of electrodes, a cathode and an anode, arranged in the electrolytic tank, where mineral water is produced by applying a DC voltage across the electrodes, and the resulting mineral water is delivered to its terminal through a water-delivery pipe, wherein the apparatus further includes chlorine-concentration control means which including: a main water-delivery pipe and a bypass water-delivery pipe into which a portion of the water-delivery pipe is diverged; and a water purification tank provided in the main water-delivery pipe for removing an available chlorine component.

## Description

### Technical Field

This invention relates to a mineral-water producing apparatus which produces mineral water by adding mineral elements to raw water.

### Background Art

As the above-described type of mineral-water producing apparatus, there is disclosed one in Japanese Patent Publication 9-164390.

This mineral-water producing apparatus including: an electrolytic tank; a pair of electrodes, cathode and anode, arranged in the electrolytic tank; and a mineral eluting material(s), such as coral sand, healstone (bakuhanseki) or mineral stone, also arranged in the electrolytic tank. The apparatus electrolyzes the city water in the electrolytic tank by standing water electrolysis, in which a DC voltage is applied across the electrodes while accumulating the water in the electrolytic tank, or flowing water electrolysis, in which a DC voltage is applied across the electrodes while feeding the water in the electrolytic tank to the outside, to produce acid water on the anode side and causes elution of a mineral element from the mineral eluting material (s) with the acid water.

When city water is electrolyzed, chlorine ions (Cl⁻) contained in the city water react on the anode side as follows:

2Cl⁻ → Cl₂ + 2e⁻

to produce chlorine (Cl₂).

The chlorine (Cl₂) then reacts as follows:

Cl₂ + H₂O → HClO + HCl

to produce hypochlorous acid (HClO), which is available chlorine.

Accordingly, when using the above described mineral-water producing apparatus in a drink spout, "mineral water with a high available chlorine concentration", which is unfit to drink, might be fed through the water-delivery pipe and affect the taste of the drink water due to the smell of chlorine. Thus, a water purification tank is usually installed in the water-delivery pipe so that available chlorine is removed through activated carbon or a hollow fiber membrane in the water purification tank.

However, once available chlorine is completely removed in the water purification tank, mineral water not having a sterilization capability flows through the water-delivery pipe at all times, microorganisms are likely to propagate in the water-delivery pipe, and besides, when the drink selling intervals are long, mineral water stays in the pipe for a long time, and therefore microorganisms propagate more and more.

Possible solutions for this problem include: providing a chlorine producing device to the water-delivery pipe separately; and installing an available chlorine addition device in the water-delivery pipe. However, these solutions increase the size and the cost of the entire apparatus.

Accordingly, the object of this invention is to provide a mineral-water producing apparatus which can provide mineral water with an available chlorine concentration fit for a mineral drink, and in addition, can prevent microorganisms from propagating in its water-delivery pipe.

### Disclosure of the Invention

This invention is a mineral-water producing apparatus, which including: an electrolytic tank to which raw water, such as city water, is supplied; a mineral eluting material(s) arranged in the electrolytic tank; and a pair of electrodes, a cathode and an anode, arranged in the electrolytic tank, where mineral water is produced by applying a DC current across the electrodes, and the resulting mineral water is delivered to its terminal through a water-delivery pipe, wherein the apparatus further including a chlorine-concentration control means for controlling the available chlorine concentration of the mineral water delivered to the terminal so that the concentration thereof fall within a predetermined range.

Since the chlorine-concentration control means controls the available chlorine concentration of the mineral water flowing through the water-delivery pipe to fall within a predetermined range, the concentration of available chlorine can be realized which allows the mineral water flowing through the water-delivery pipe to be fit to drink and prevents microorganisms from propagating in the water-delivery pipe.

### Brief Description of the Drawings

Figure 1 is a block diagram of a mineral-water producing apparatus in accordance with the first embodiment of this invention;
Figure 2 is a sectional front elevation of the tank main body shown in Figure 1;
Figure 3 is a sectional side elevation of the tank main body shown in Figure 1;
Figure 4 is a block diagram illustrating a variation of the chlorine-concentration control means shown in Figure 1;
Figure 5 is a block diagram illustrating another variation of the chlorine-concentration control means shown in Figure 1;
Figure 6 is a view, partially in section and partially broken away, showing a specific structure of the water purification tank shown in Figure 1;
Figure 7 is a view, partially in section and partially broken away, showing another specific structure of the water purification tank shown in Figure 1;
Figure 8 is a view, partially in section and partially broken away, showing still another specific structure of the water purification tank shown in Figure 1;
Figure 9 is a block diagram of a mineral-water producing apparatus in accordance with the second embodiment of this invention;
Figure 10 is a block diagram illustrating the drive control circuit of the mineral-water producing apparatus shown in Figure 9;
Figure 11 is a flow chart illustrating the drive control of the mineral-water producing apparatus shown in Figure 9;
Figure 12 is a block diagram of a mineral-water producing apparatus in accordance with the third embodiment of this invention;
Figure 13 is a block diagram illustrating the drive control circuit of the mineral-water producing apparatus shown in Figure 12;
Figure 14 is a flow chart illustrating the drive control of the mineral-water producing apparatus shown in Figure 12; and
Figure 15 is a mineral-water producing apparatus in accordance with the fourth embodiment of this invention.

### Best Mode for Carrying Out the Invention

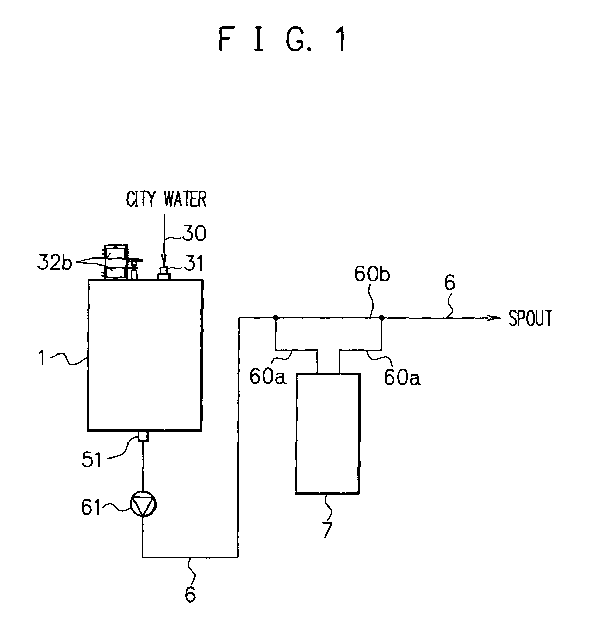

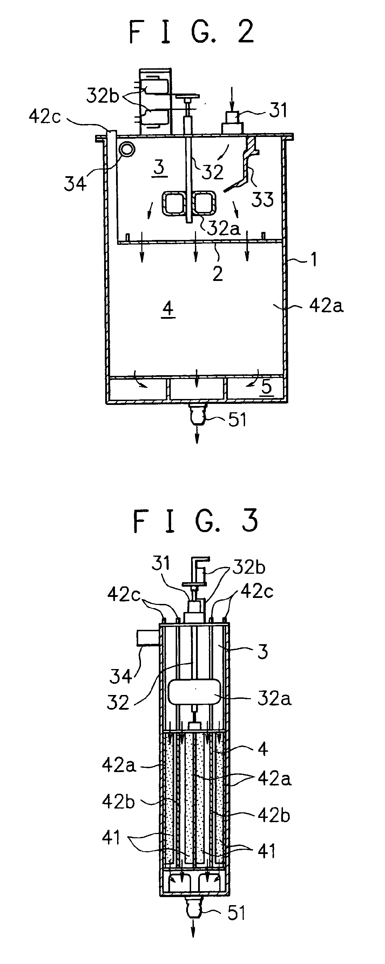

Figures 1 to 3 show a mineral-water producing apparatus in accordance with the first embodiment of this invention. Figure 1 is a block diagram of the mineral-water producing apparatus, and Figures 2 and 3 are a sectional front elevation and a sectional side elevation of the tank main body shown in Figure 1, respectively.

The tank main body 1 is a flat box-like shape and its inside is practically partitioned into two: an upper part and a lower part via a partition board 2 which water can flow through. Above the partition board 2 of the tank main body 1 is formed an accumulating tank 3 to which city water is supplied and below the partition board 2 is formed an electrolytic tank 4 which electrolyzes water.

On the top board of the accumulating tank 3 is provided a water inlet tube 31 to which water-supply pipe 30 for supplying city water is connected. And a water-level detector 32 is installed in the accumulating tank 3. The water-level detector 32 keeps the water in the accumulating tank 3 at a fixed level in such a manner that its micro-switches 32b detect the upper and the lower level of the water through the up and down movement of its float 32a and it controls the water supply and the water stop from the water inlet tube 31. In the accumulating tank 3 is also provided a guide board 33, which introduces the city water supplied through the water inlet tube 31 to the center so that the city water flow throughout the accumulating tank3. In the accumulating tank 3 is also provided an overflow pipe 34 which discharges water exceeding a tolerable level.

In the electrolytic tank 4, more than one mineral eluting material(s) 41 each packed in a flat case and more than one pair of electrodes, anode 42a and cathode 42b, are arranged alternately. Granulated or powdered coral sand, healstone (bakuhanseki), mineral stone, etc. are used for the mineral eluting material(s) 41. Terminals 42c of respective electrodes 42a, 42b penetrate the partition board 2 and protrude out of the top board of the accumulating tank 3 in order to be connected to a power source.

Once a DC voltage is applied across each pair of electrodes 42a, 42b in the electrolytic tank 4, the following reaction occurs on the anode 42a side:

2H₂O → 4H⁺ + O₂ + 4e⁻

to increase the hydrogen-ion concentration and produce acid water.

On the other hand, on the cathode 42b side, the following reaction occurs:

4H₂O + 4e⁻ → 2H₂ + 4OH⁻

to produce alkali water.

The mineral eluting material (s) 41 , for example, calcium carbonate (CaCO₃) and the acid water react as follows:

CaCO₃ + 2H⁺ → Ca²⁺ + H₂O + CO₂

to elute mineral ions (Ca²⁺).

Each flat case can be packed with a mixture of the mineral eluting material(s) 41 and an electrolytic auxiliary agent consisting of an electrically conductive material. As the electrically conductive material, any one can be used which is selected from among powder-like activated carbon, granule-like activated carbon, fiber-like activated carbon, charcoal, carbon black, gold, silver and platinum-based metals and mixtures thereof. Since these electrically conductive materials are carbon-based materials, gold, silver and platinum-based metals, even if they are eluted, they are harmless to human bodies. When the electrically conductive material is activated carbon, silver may be made to adhere to the activated carbon to improve the conductivity. Even if the mineral eluting material(s) 41 and the electrically conductive materials are mixed, the mixture allows water to flow through the inside thereof. When mixing an electrolytic auxiliary agent in the mineral eluting material(s) 41, the electrolytic auxiliary agent prevents the conductivity of the mineral eluting material(s) 41 from lowering, even if the mineral eluting material(s) are insulating, and hence the decrease in mineral eluting efficiency.

Below the electrolytic tank 4 is installed a collection chamber 5 where mineral water produced in the electrolytic tank 4 joins each other. On the lower side of the bottom board of the collection chamber 5 is provided a water outlet tube 51 for leading out the mineral water flowed in the collection chamber 5.

Constructing the mineral-water producing apparatus in the above described manner allows city water to flow via the following route:
water inlet pipe 31 → accumulating tank 3 → partition board 2 → electrolytic tank 4 → collection chamber 5 → water outlet pipe 51
and to be led out through the water outlet tube 51, as shown by the arrows in Figures 2 and 3.

The water outlet tube 51 of the tank main body 1 is connected to a spout (a terminal such as a faucet) through a water-delivery pipe 6 which includes a pump 61. This water-delivery pipe 6 includes a main water-delivery pipe 60a and a bypass water-delivery pipe 60b which diverge from the part of the downstream of the pump 61, and the main water-delivery pipe 60a has a water purification tank 7 for use in removal of available chlorine component.

The above described main water-delivery pipe 60a, bypass water-delivery pipe 60b and water purification tank 7 constitute chlorine-concentration control means. In this chlorine-concentration control means, the diameter D2 of the bypass water-delivery pipe 60b is made smaller than the diameter D1 of the main water-delivery pipe 60a, which has a water purification tank 7, so that much of the mineral water is flowed into the water purification tank 7 and its available chlorine component is removed, while mineral water containing a higher concentration of available chlorine, for example, mineral water containing 1.0 ppm or more of available chlorine is flowed through the bypass water-delivery pipe 60b in a smaller amount due to the pressure loss of the bypass water-delivery pipe 60b. In other words, the main water-delivery pipe 60a and the bypass water-delivery pipe 60b control water flow depending on their respective diameters and thus the concentration of the available chlorine in the mineral water sent to the spout is set to fall in a range of 0.4 ppm or less, in which the smell of chlorine is not disagreeable, and in a range of 0.1 ppm or more, in which its concentration is effective in sterilizing water.

When using the above described mineral-water producing apparatus in a drink spout, the piping is done so that the mineral water from the water outlet tube 51 flows into the spout of the drink spout.

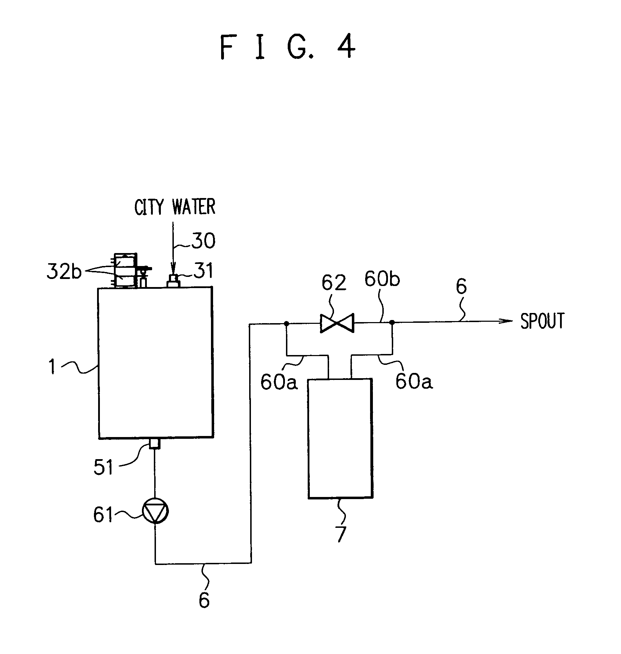

As the above described chlorine-concentration control means, one shown in Figure 4 may be employed. In the chlorine-concentration control means, the main water-delivery pipe 60a and the bypass water-delivery pipe 60b are formed to have almost the same diameter and the bypass water-delivery pipe 60b is provided with a solenoid flow control valve 62, which is an on-off valve. This means performs water-flow control while controlling the driving time of the flow control valve 62 based on the duty ratio, for example, of 40% or less, and thereby being capable of controlling the concentration of the available chlorine in the mineral water fed to the spout to fall in the range of 0.1 ppm to 0.4 ppm.

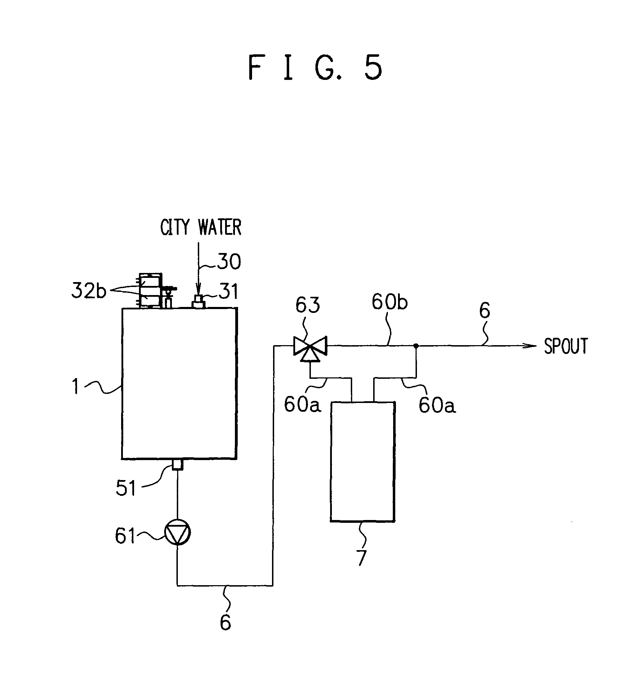

As the above described chlorine-concentration control means, one shown in Figure 5 may also be employed. In this chlorine-concentration control means, a solenoid flow control valve 63, which is a three-way valve, is provided at the portion of the water-delivery pipe at which the main water-delivery pipe 60a and the bypass water-delivery pipe 60b diverge from each other or merge into each other. This means controls water flow by controlling the switching time of the flow control valve 63 based on a duty ratio, for example, based on a flow ratio between the main water-delivery pipe 60a and the bypass water-delivery pipe 60b of 2 : 1, thereby being capable of controlling the concentration of the available chlorine in the mineral water fed to the spout to fall in the range of 0.1 ppm to 0.4 ppm.

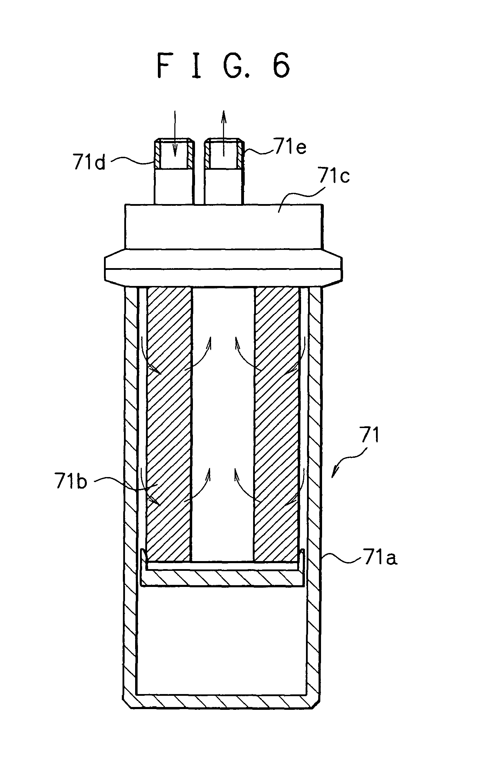

Figures 6 to 8 show a specific structure of the above described water purification tank 7. The water purification tank 71 shown in Figure 6 has a structure including: a tank main body 71a; and an annular activated-carbon layer 71b extending up and down in the tank main body 71a. This water purification tank 71 takes in mineral water through the inlet 71d of its lid body 71c which is provided on its top portion, passes the mineral water through the activated carbon layer 71b from the outside toward the inside thereof so as to remove not only dust but also the smell of chlorine, and flows the mineral water out through the outlet 71e of the lid body 71c.

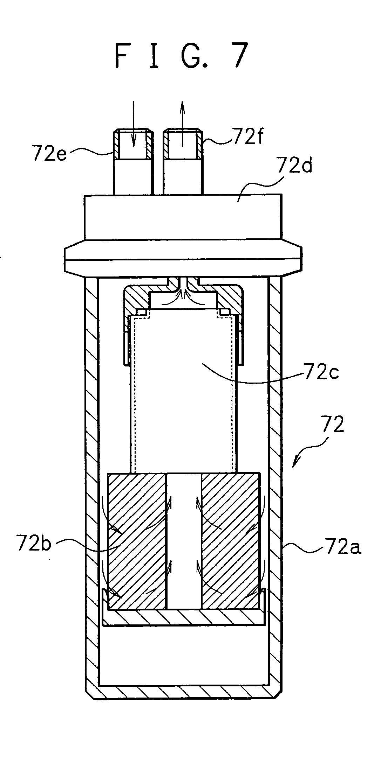

The water purification tank 72 shown in Figure 7 has a structure including: a tank main body 72a; and an annular activated-carbon layer 72b extending up and down in the lower part of the tank main body 72a; and a yarn-membrane-packed cylinder 72c packed with hollow fiber membrane and arranged in the upper part of the tank main body 72a. This water purification tank 72 takes in mineral water through the inlet 72e of its lid body 72d which is provided on its top portion, passes the mineral water through the activated-carbon layer 72b from the outside toward the inside thereof so as to remove not only dust but also the smell of chlorine, and passes the mineral water through the yarn-membrane-packed cylinder 72c to flow the same out through the outlet 72f of the lid body 72d.

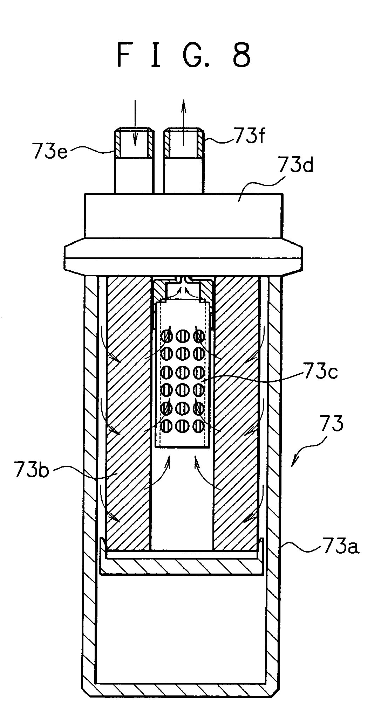

The water purification tank 73 shown in Figure 8 has a structure including: a tank main body 73a; an annular activated-carbon layer 73b extending up and down in the tank main body 73a; and a yarn-membrane-packed cylinder 73c packed with hollow fiber membrane and arranged in the inside of the activated-carbon layer 73b. This water purification tank 73 takes in mineral water through the inlet 73e of its lid body 73d which is provided on its top portion, passes the mineral water through the activated-carbon layer 73b from the outside toward the inside thereof, further passes the mineral water through the yarn-membrane packed cylinder 73c from the outside toward the inside thereof so as to remove not only dust but also the smell of chlorine, and flows the mineral water out through the outlet 73f of the lid body 73d.

As described above, according to the mineral-water producing apparatus in accordance with the first embodiment of this invention, the concentration of the available chlorine in the mineral water produced in the electrolytic tank is controlled, by chlorine-concentration control means, to fall in the range of 0.1 ppm to 0.4 ppm in the course of the mineral water's flowing toward the spout through the water-delivery pipe 6, whereby mineral water can be provided which is fit to drink and capable of preventing microorganisms from propagating.

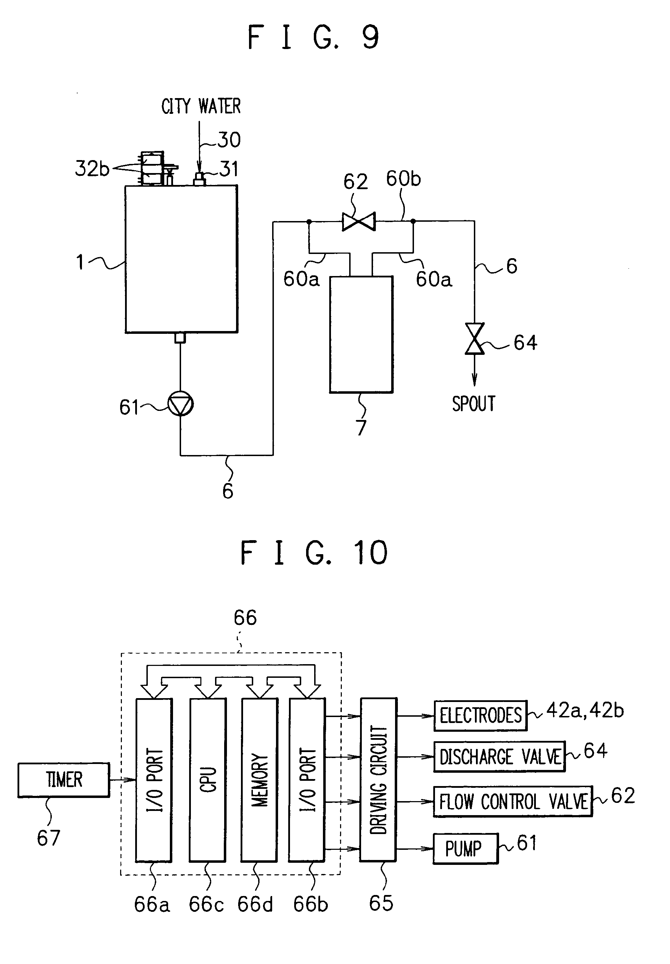

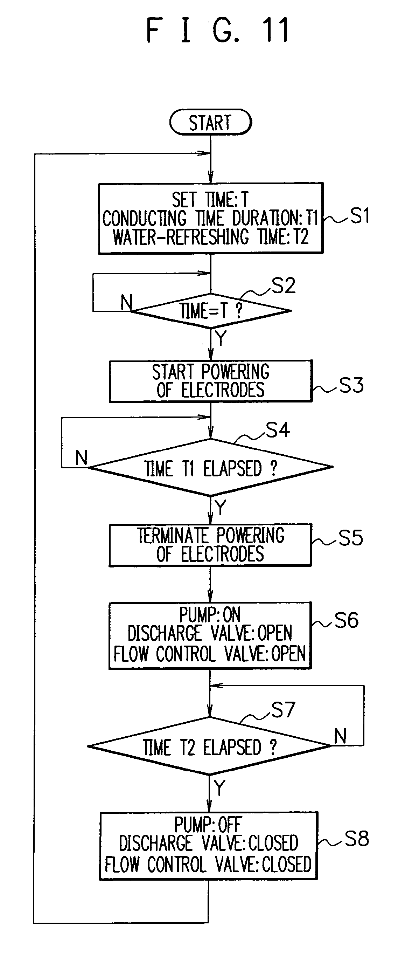

Figures 9 to 11 show a mineral-water producing apparatus in accordance with the second embodiment of this invention. Figure 9 is a block diagram of a mineral-water producing apparatus, Figure 10 is a block diagram illustrating the drive control circuit of the mineral-water producing apparatus shown in Figure 9, and Figure 11 is a flow chart illustrating the driving control of the mineral-water producing apparatus shown in Figure 9. The same constituents as those of the mineral-water producing apparatus in accordance with the first embodiment is denoted with the same reference numeral and the description thereof is omitted.

In the mineral-water producing apparatus in accordance with the first embodiment, the available chlorine concentration in the mineral water can be controlled to fall in the predetermined range by the chlorine concentration control means. However, when there is little demand for drinks, for example, in the middle of the night, the mineral water stays in the water-delivery pipe 6 for a long time, and this results in natural decomposition and decrease of the available chlorine in the mineral water in the water-delivery pipe 6 and might cause propagation of microorganisms in the water-delivery pipe 6. So the mineral-water producing apparatus in accordance with the second embodiment of this invention includes sterilization means which can eliminate the above described fears.

The mineral-water producing apparatus shown in Figure 9 is obtained by applying sterilization means to a mineral-water producing apparatus having a flow control valve 62 in its bypass water-delivery pipe 60b (refer to Figure 4). And the sterilization means including: an on-off discharge valve 64 provided on the spout side of the water-delivery pipe 6; means for monitoring whether it is a set time T or not based on the signals from the timer 67; and means for powering the electrodes 42a, 42b over conducting time duration T1 when it is a set time T, and besides, operating the pump 61 and opening both the flow control valve 62 and the discharge valve 64 over water-refreshing time T2 after the conducting time duration T1 has elapsed.

The drive control circuit shown in Figure 10 including: electrodes 42a, 42b; a pump 61; and a controller 66, which is a microcomputer, as means for controlling both the flow control valve 62 and the discharge valve 64 via a driving circuit 65. The controller 66 controls the equipment 42a, 42b, 61, 62 and 64 based on the signals from a timer 67 which clocks time and length of time.

The controller 66 also includes I/O ports 66a and 66b, a CPU 66c and a memory 66d. In the memory 66d are stored a conducting time duration T1 during which the electrodes 42a, 42b are powered, a water-refreshing time T2 during which the pump 61, the flow control valve 62 and the discharge valve 64 are driven, and set time T when the pump 61, the flow control valve 62 and the discharge valve 64 start to be driven.

The conducting time duration T1 is "the time it takes to allow the mineral water in the electrolytic tank 4 to have a predetermined available chlorine concentration", which is obtained by experiments ahead of time. The water-refreshing time T2 is also obtained by experiments ahead of time, specifically it is the time it takes to fill the entire water-delivery pipe 6 with newly produced electrolytic water when driving the pump 61 and fully opening both the flow control valve 62 and the discharge valve 64. The set time T is the midnight time when there is little demand for drinks.

Then, the method for controlling the drive of the above described mineral-water producing apparatus will be described with reference to Figure 11 . In the memory 66d are set time T, a conducting time duration T1 during which the electrodes 42a, 42b are powered, and a water-refreshing time T2 (step S1). First, whether it is set time T or not is monitored based on the signals from the timer 67 (step S2). When it is set time T, the electrodes 42a, 42b are powered over the conducting time duration T1 (steps S3 to S5). This electrolyzes the water in the electrolytic tank to produce mineral water which contains available chlorine.

After mineral water is produced, the pump 61 is driven over the water-refreshing time T2, while the discharge valve 64 and the flow control valve 62 are opened (steps S6 to S8). This discharges the water staying in the water-delivery pipe 6 and therefore containing a lower concentration of available chlorine (the water which might cause the propagation of microorganisms) from the spout, while allowing fresh mineral water containing available chlorine to stay in the water-delivery pipe 6. Thus, the propagation of microorganisms in the water-delivery pipe 6 is prevented.

As described above, according to the mineral-water producing apparatus in accordance with the second embodiment of this invention, even if a long time has elapsed since the last mineral water feeding and before the next mineral water feeding and there occurs the danger of microorganisms' growing in the mineral water staying in the water-delivery pipe, the propagation of microorganisms is prevented reliably since the mineral water staying in the water-delivery pipe is replaced with newly resulting mineral water which contains available chlorine. Other advantages of the apparatus are the same as those of the mineral-water producing apparatus in accordance with the first embodiment.

The above described mineral-water producing apparatus is obtained by applying sterilization means to the mineral-water producing apparatus including a flow control valve 62, which is an on-off valve, provided in the bypass water-delivery pipe 60b (refer to Figure 4). However, the same advantages can be obtained when applying the above sterilization means to the apparatus including a flow control valve 63, which is a three-way valve , (refer to Figure 5) or the apparatus including neither flow control valve 62 nor flow control valve 63 (refer to Figure 3).

In the above described mineral-water producing apparatus, when the mineral water in the water-delivery pipe 6 is refreshed, mineral water which contains available chlorine is made to newly stay in the pipe; however, the water in the water-delivery pipe 6 can be replaced first with mineral water which contains a high concentration of available chlorine to clean the inside of the water-delivery pipe 6 and then with mineral water whose available chlorine concentration is fit to drink.

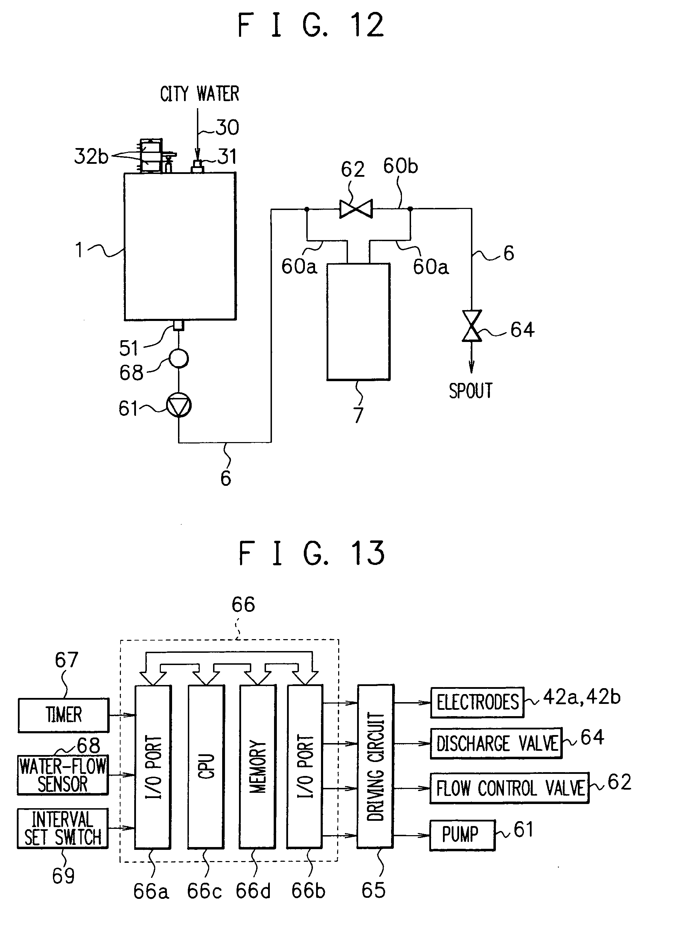

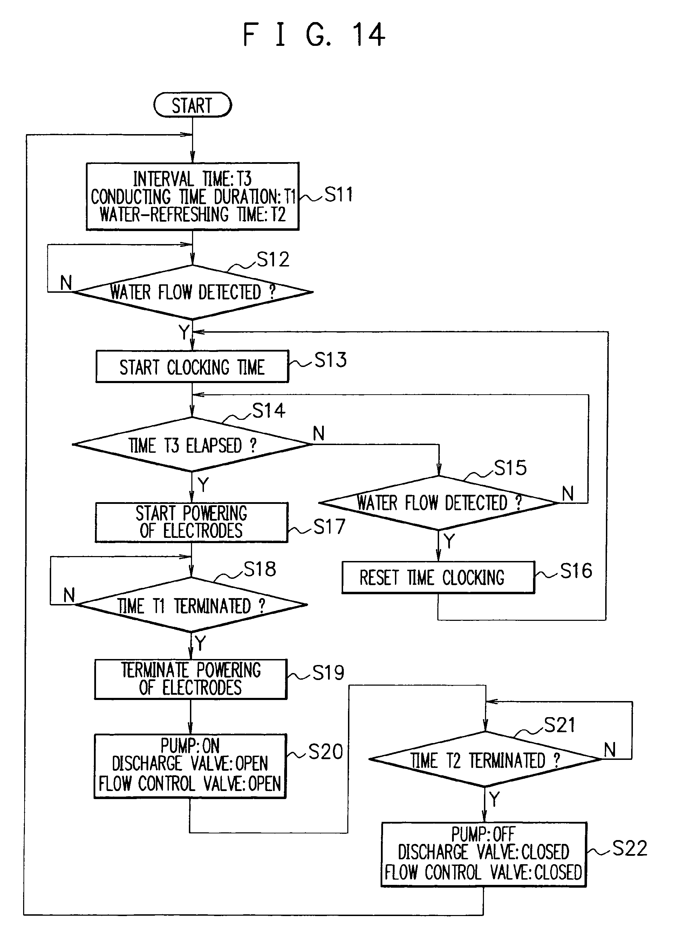

Figures 12 to 14 show a mineral-water producing apparatus in accordance with the third embodiment of this invention. Figure 12 is a block diagram of a mineral-water producing apparatus, Figure 13 is a block diagram illustrating the drive control circuit of the mineral-water producing apparatus shown in Figure 12, and Figure 14 is a flow chart illustrating the drive control of the mineral-water producing apparatus shown in Figure 12. The same constituents as those of the mineral-water producing apparatus in accordance with the above described second embodiment are denoted with the same reference numerals and the description thereof is omitted.

In the mineral-water producing apparatus in accordance with the second embodiment of this invention, the mineral water staying in the water-delivery pipe 6 is replaced with newly resulting mineral water at the time when there is little demand for drinks by using the sterilization means. On the other hand, in the sterilization means of the mineral-water producing apparatus in accordance with this embodiment, a method is employed in which the elapsed time since the last drink selling and before the next drink selling, in other words, the time interval between the last drink selling and the next drink selling is measured, and when the measured time interval becomes equal to the previously set time interval, the mineral water staying in the water-delivery pipe 6 is replaced with newly produced electrolytic water.

The mineral-water producing apparatus shown in Figure 12 is obtained by applying sterilization means to the apparatus including a flow control valve 62 in the bypass water-delivery pipe 60b (refer to Figure 4). And the sterilization means including: an on-off discharge valve 64 which is provided on the spout side of the water-delivery pipe 6; a water-flow sensor 68 which is provided between the lead out tube 51 of the tank main body 1 and the pump 61 and detects a state in which mineral water is fed to the spout; timer means which measures the elapsed time since the start of water delivery based on the water-feed signals from the water-flow sensor 68; and means for powering the electrodes 42a, 42b over the conducting time duration T1 after a predetermined time duration interval T3 has elapsed, and besides, operating the pump 61 and opening both the flow control valve 62 and the discharge valve 64 over the water-refreshing time T2 after the conducting time duration T1 has elapsed.

The drive control circuit shown in Figure 13 includes a controller 66, which is a microcomputer, as means for controlling: the electrodes 42a and 42b; the pump 61; the flow control valve 62 and the discharge valve 64 via the driving circuit 65. The controller 66 controls equipment 42a, 42b, 61, 62 and 64 based on the signals from the water-flow sensor 68, the timer 67 and the interval set switch 69.

The controller 66 also includes: I/O ports 66a, 66b; a CPU 66c; and a memory 66d. In the memory 66d, the conducting time duration T1 during which the electrodes 42a, 42b are powered, the water-refreshing time T2 during which the pump 61 and both the water-flow control valve 62 and the discharge valve 64 are driven, and the time interval T3 set by the interval set switch 69 are stored.

The conducting time duration T1 and the water-refreshing time T2 are set in the same manner as the apparatus in accordance with the second embodiment, and the time interval T3 is the time obtained by experiments ahead of time, in other words, it is the time interval which might cause the propagation of microorganisms in the mineral water staying in the water-delivery pipe 6.

Then, the method for controlling the drive of the above described mineral-water producing apparatus will be described with reference to Figure 14. In the memory 66d are set a time interval T3, a conducting time duration T1 during which the electrodes 42a, 42b are powered, and a water-refreshing time T2 (step S11). First, whether a drink is sold or not, in other words, whether the water-flow sensor 68 detects a water flow or not is monitored (step S12). When the water-flow sensor detects a water-flow, clocking time is started by the timer 67 (step 13) and whether the time interval T3 between the last water-flow detection and the next water-flow detection has elapsed or not is monitored (steps S14, S15). When a water flow is detected within the time interval T3, the clocking time of the timer is reset (step S16) and clocking time is started again. On the other hand, when no water flow is detected within the time interval T3, the electrodes 42a, 42b are powered over the conducting time duration T1 (steps S17 to S19). This electrolyzes the water in the electrolytic tank 4 to produce mineral water which contains available chlorine.

After mineral water is produced, the pump 61 is driven over the water-refreshing time T2, while the discharge valve 64 and the flow control valve 62 are opened (steps S20 to S22). This discharges the water staying in the water-delivery pipe 6 and therefore containing a lower concentration of available chlorine (the water which might cause the propagation of microorganisms) from the spout, while allowing fresh mineral water containing available chlorine to stay in the water-delivery pipe 6. Thus, the propagation of microorganisms in the water-delivery pipe 6 is prevented.

As described above, according to the mineral-water producing apparatus in accordance with the third embodiment of this invention, even if a long time has elapsed since the last mineral water feeding and before the next mineral water feeding and there occurs the danger of microorganisms' growing in the mineral water staying in the water-delivery pipe, the propagation of microorganisms is prevented reliably since the mineral water staying in the water-delivery pipe is replaced with newly resulting mineral water which contains available chlorine. Other advantages of the apparatus are the same as those of the mineral-water producing apparatus in accordance with the first embodiment.

The above described mineral-water producing apparatus is obtained by applying sterilization means to the mineral-water producing apparatus including a flow control valve 62, which is an on-off valve, provided in the bypass water-delivery pipe 60b (refer to Figure 4). However, the same advantages can be obtained when applying the above sterilization means to the apparatus including a flow control valve 63, which is a three-way valve, (refer to Figure 5) or the apparatus including neither flow control valve 62 nor flow control valve 63 (refer to Figure 3).

Further, in the above described mineral-water producing apparatus, the time interval is clocked based on the signals from the water-flow sensor 68 provided in the water-delivery pipe 6. However, the time interval may be clocked using, instead of the water-flow sensor 68, a water-level detector 32 which detects the water level of the tank main body 1 and based on the switch signals from the micro-switch 32b of the water-level detector 32.

It goes without saying that instead of the water-flow sensor 68, may be used any one of a flow switch which detects a flow directly, a rotary-impeller type of flow sensor which detects the flow of water from the number of revolution of the impeller, and a pressure switch which detects a flow from the water pressure.

The above described mineral-water producing apparatus is so designed that the time interval T3 can be arbitrarily set through an interval set switch 69; however, control means may also be added which detects the temperature of city water and corrects the time interval T3 to be shorter when the water temperature is high and corrects the time interval T3 to be longer when the water temperature is low, taking into account the consumption of available chlorine due to the water temperature change.

Further, in the above described mineral-water producing apparatus, when refreshing the water in the water-delivery pipe 6, mineral water which contains available chlorine is made to newly stay in the pipe; however, the water in the water-delivery pipe 6 can be replaced first with mineral water which contains a high concentration of available chlorine to clean the inside of the water-delivery pipe 6 and then with mineral water whose available chlorine concentration is suitable for drinking.

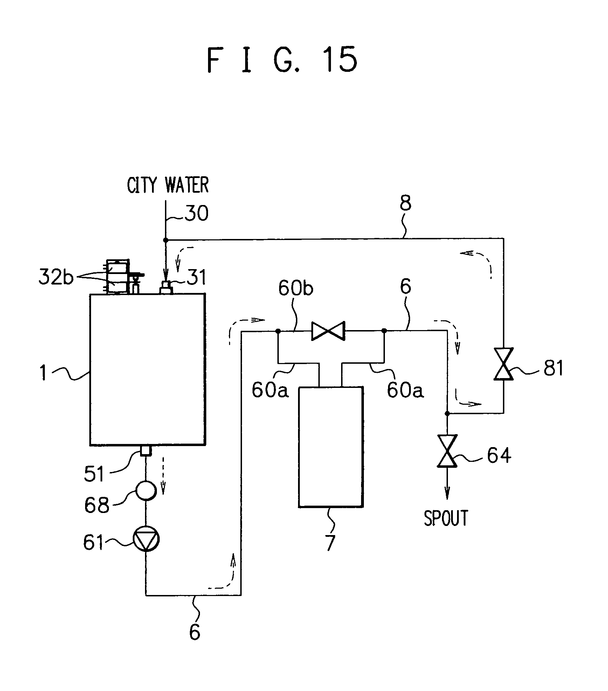

Figure 15 shows a mineral-water producing apparatus in accordance with the fourth embodiment of this invention. Figure 15 is a block diagram of the mineral-water producing apparatus. The same constituents as those of the mineral-water producing apparatus in accordance with the third embodiment are denoted with the same reference numerals and the description thereof is omitted.

This mineral-water producing apparatus is different from that of the third embodiment in that the water staying in the water-delivery pipe 6 is not discharged from the spout by opening the discharge valve 64 of the sterilization means, but is returned to the tank main body 1.

Specifically, a return pipe 8 is provided whose one end is connected to the water-supply pipe 30 and the other end to the portion of the water-delivery pipe 6 in the vicinity of the upstream of the discharge valve 64, and an on-off return valve 81, which is a solenoid valve, is installed the return pipe 8.

According to the mineral-water supplying apparatus, the water staying in the water-delivery pipe 6 is returned to the tank main body via the return pipe 8 by closing the discharge valve 64 and opening the return valve 81 when refreshing water in the steps 20 and 21, as shown by the alternate long and short dash line arrow of Figure 15. Accordingly, refreshing water does not require water discharge operation.

As described above, the mineral-water producing apparatus in accordance with the fourth embodiment of this invention, water discharge operation is not required when refreshing water, and therefore the water staying the water-delivery pipe 6 can be effectively used. Other advantages are the same as those of the mineral-water producing apparatus in accordance with the third embodiment.

In the above described mineral-water producing apparatus, sterilization means is applied to the apparatus which includes a flow control valve 62, which is an on-off valve, in the bypass water-delivery pipe 60b (refer to Figure 4); however, the same advantages are obtained when the above described sterilization means is applied to the apparatus which includes a flow control valve 63, which is a three-way valve, (refer to Figure 5) or the apparatus which includes neither flow control valve 62 nor flow control valve 63 (refer to Figure 3).

The mineral-water producing apparatuses in accordance with the first to fourth embodiments described so far have a structure in which mineral water is fed by the pump 61; however, when the tank main body 1 has a closed structure, mineral water can be fed by the pressure of city water and pump 61 is not required. Further, when the tank main body has a closed structure, the water-flow sensor 68 of the mineral-water producing apparatuses in accordance with the third and fourth embodiments can be installed in the water-supply pipe 30.

### Industrial Applicability

The mineral-water producing apparatus of this invention is useful not only for drink spouts for business use, that is, drink spouts for selling drinks, but also for drinking-water feeders designed to improve the quality of drinking water for domestic purpose.

## Claims

1. A mineral-water producing apparatus, which comprising: an electrolytic tank to which raw water, such as city water, is supplied; a mineral eluting material(s) arranged in the electrolytic tank; and a pair of electrodes, a cathode and an anode, arranged in the electrolytic tank, where mineral water is produced by applying a DC voltage across the electrodes, and the resulting mineral water is delivered to its terminal through a water-delivery pipe,
wherein the apparatus further comprising: chlorine-concentration control means for controlling the concentration of available chlorine in the mineral water delivered to the terminal so that the concentration thereof falls within a predetermined range.

2. The mineral-water producing apparatus according to claim 1,
wherein the chlorine-concentration control means controls the concentration of available chlorine in the mineral water delivered to the terminal so that the concentration thereof falls in the range of 0.1 ppm to 0.4 ppm.

3. The mineral-water producing apparatus according to claim 1,
wherein the chlorine-concentration control means comprising: a main water-delivery pipe and a bypass water-delivery pipe into which a portion of said water-delivery pipe is diverged; a water purification tank provided in the main water-delivery pipe for removing an available chlorine component; and a water-flow control means for controlling the concentration of available chlorine in the mineral water delivered to the terminal by controlling the flows of water to the main water-delivery pipe and to the bypass water-delivery pipe.

4. The mineral-water producing apparatus according to claim 3,
wherein the water-flow control means is based on the dimensional relationship between the diameter of the main water-delivery pipe and that of the bypass water-delivery pipe.

5. The mineral-water producing apparatus according to claim 3,
wherein the water-flow control means is made up of a flow control valve, which is an on-off valve, provided in the bypass water-delivery pipe.

6. The mineral-water producing apparatus according to claim 3,
wherein the water-flow control means is made up of a flow control valve, which is a three-way valve, provided at the spot of the water-delivery pipe at which the main water-delivery pipe and the bypass water-delivery pipe diverge from each other or merge with each other.

7. The mineral-water producing apparatus according to claim 1,
wherein the apparatus further comprising: a sterilization means which replaces the mineral water staying in the water-delivery pipe with newly resulting mineral water which contains available chlorine.

8. The mineral-water producing apparatus according to claim 7,
wherein the sterilization means comprising: an on-off discharge valve provided on the terminal side of the water-delivery pipe; a means for monitoring whether it is a predetermined set time or not; a means for powering the electrodes over a predetermined time duration when it is the set time, and further opening a discharge valve over a predetermined time duration after the conducting time duration has elapsed.

9. The mineral-water producing apparatus according to claim 7,
wherein the sterilization means comprising: an on-off discharge valve provided on the terminal side of the water-delivery pipe; a water-flow detection means for detecting a state in which mineral water is delivered to the terminal; a timer means for measuring the elapsed time since the start of water delivery based on the water flow signals from the water-flow detection means; a means for powering the electrodes over a predetermined time duration when the timer means has sensed the elapse of a predetermined time duration interval since the water delivery state, and further opening the discharge valve over a predetermined time duration after the conducting time duration has elapsed.

10. The mineral-water producing apparatus according to claim 8,
wherein the chlorine-concentration control means comprising: a main water-delivery pipe and a bypass water-delivery pipe into which a portion of said water-delivery pipe is diverged; a water purification tank provided in the main water-delivery pipe for removing an available chlorine component; and a water-flow control means for controlling the concentration of available chlorine in the mineral water delivered to the terminal by controlling the flows of water to the main water-delivery pipe and to the bypass water-delivery pipe,
the water-flow control means being based on the dimensional relationship between the diameter of the main water-delivery pipe and that of the bypass water-delivery pipe.

11. The mineral-water producing apparatus according to claim 9,
wherein the chlorine-concentration control means comprising: a main water-delivery pipe and a bypass water-delivery pipe into which a portion of said water-delivery pipe is diverged; a water purification tank provided in the main water-delivery pipe for removing an available chlorine component; and a water-flow control means for controlling the concentration of available chlorine in the mineral water delivered to the terminal by controlling the flows of water to the main water-delivery pipe and to the bypass water-delivery pipe,
the water-flow control means being based on the dimensional relationship between the diameter of the main water-delivery pipe and that of the bypass water-delivery pipe.

12. The mineral-water producing apparatus according to claim 8,
wherein the chlorine-concentration control means comprising: a main water-delivery pipe and a bypass water-delivery pipe into which a portion of said water-delivery pipe is diverged; a water purification tank provided in the main water-delivery pipe for removing an available chlorine component; and a water-flow control means for controlling the concentration of available chlorine in the mineral water delivered to the terminal by controlling the flows of water to the main water-delivery pipe and to the bypass water-delivery pipe,
the water-flow control means being made up of the flow control valve, which is an on-off valve, provided in the bypass water-delivery pipe, and
the sterilization means opening both the discharge valve and the flow control valve over a predetermined time duration.

13. The mineral-water producing apparatus according to claim 9,
wherein the chlorine-concentration control means comprising: a main water-delivery pipe and a bypass water-delivery pipe into which a portion of said water-delivery pipe is diverged; a water purification tank provided in the main water-delivery pipe for removing an available chlorine component; and a water-flow control means for controlling the concentration of available chlorine in the mineral water delivered to the terminal by controlling the flows of water to the main water-delivery pipe and to the bypass water-delivery pipe,
the water-flow control means being made up of the flow control valve, which is an on-off valve, provided in the bypass water-delivery pipe, and
the sterilization means opening both the discharge valve and the flow control valve over a predetermined time duration.

14. The mineral-water producing apparatus according to claim 8,
wherein the chlorine-concentration control means comprising: a main water-delivery pipe and a bypass water-delivery pipe into which a portion of said water-delivery pipe is diverged; a water purification tank provided in the main water-delivery pipe for removing an available chlorine component; and a water-flow control means for controlling the concentration of available chlorine in the mineral water delivered to the terminal by controlling the flows of water to the main water-delivery pipe and to the bypass water-delivery pipe,
the water-flow control means being made up of the flow control valve, which is a three-way valve, provided at a spot at which the main water-delivery pipe and the bypass water-delivery pipe diverge from each other or merge with each other, and
the sterilization means opening both the discharge valve and the flow control valve over a predetermined time duration.

15. The mineral-water producing apparatus according to claim 9,
wherein the chlorine-concentration control means comprising: a main water-delivery pipe and a bypass water-delivery pipe into which a portion of said water-delivery pipe is diverged; a water purification tank provided in the main water-delivery pipe for removing an available chlorine component; and a water-flow control means for controlling the concentration of available chlorine in the mineral water delivered to the terminal by controlling the flows of water to the main water-delivery pipe and to the bypass water-delivery pipe,
the water-flow control means being made up of the flow control valve, which is a three-way valve, provided at a spot at which the main water-delivery pipe and the bypass water-delivery pipe diverge from each other or merge with each other, and
the sterilization means opening both the discharge valve and the flow control valve over a predetermined time duration.
